# EUROPEAN PATENT APPLICATION

(11) **EP 4 470 391 A1**
(43) Date of publication of application: **04.12.2024**
(21) Application number: 23747008.3
(22) Date of filing: 26.01.2023
(51) Int. Cl.: A23L 7/109

(54) **GROOVED NOODLES**

(30) Priority: 26.01.2022 JP 2022010158
(71) Applicant: Nisshin Seifun Welna Inc., Tokyo 101-8441 (JP)
(72) Inventor: KIMURA Ryusuke, Fujimino-city, Saitama 3568511 (JP); FUJII Tomoyuki, Tokyo 101-8441 (JP)
(74) Representative: Casalonga
(86) International application number: PCT/JP2023/002365
(87) International publication number: WO 2023/145798

(57) **Abstract**

A cross section of a noodle string includes a core region (14) situated in a central part and four hook-shaped portions (16), each hook-shaped portion (16) includes a leg portion (18) extending from the core region (14) and a blade portion (20) connected to the leg portion (18), the blade portion (20) has a first outer peripheral portion (20A) extending from the leg portion (18) in a radial direction, a second outer peripheral portion (20B) extending from the first outer peripheral portion (20A) in a circumferential direction, and a third outer peripheral portion (20C) extending from the second outer peripheral portion (20B) to the leg portion, the second outer peripheral portion (20B) is configured such that a part thereof on a first outer peripheral portion (20A) side is closer to a center of the noodle string than another part thereof on a third outer peripheral portion (20C) side is, an angular portion (25) is formed at a joint portion between the first outer peripheral portion (20A) and the second outer peripheral portion (20B), and a joint portion between the second outer peripheral portion (20B) and the third outer peripheral portion (20C) is provided with an arc-shaped portion (26) with a radius of curvature of 0.050 to 0.160 mm.

## Description

### TECHNICAL FIELD

The present invention relates to a grooved noodle and particularly to a grooved noodle that is provided with four grooves along a noodle string direction and has a substantially circular main outline in cross section perpendicular to the noodle string direction.

### BACKGROUND ART

Conventionally, there have been proposed noodles having slits or grooves along the noodle string direction for the purpose of reducing boiling time. For instance, Patent Literatures 1 and 2 each propose a grooved noodle that has a substantial part in a central region of the noodle string of circular shape in cross section and that is provided with a plurality of grooves having a cross-sectional shape extending as curving in a spiral manner from the central region to the surface of the noodle string, thereby increasing the surface area of the noodle string, which leads to reduced boiling time, while obtaining good texture (al dente) slightly having a half-boiled region at the center of the noodle string.

A grooved noodle having grooves at the surface of the noodle string as above absorbs water and swells when being boiled, whereupon the grooves are closed. At this time, in the case where the groove width is larger toward the central part of the cross section of the noodle string, while the surface side of the grooves is closed, the inside of the grooves keeps a space, so that boiling water would remain inside the grooves. This causes a soggy texture of a boiled noodle. To cope with it, the grooved noodles of Patent Literatures 1 and 2 are configured to have grooves in a so-called wedge shape that decreases in width toward the central part of the cross section of the noodle string, thereby solving the above problem.

### CITATION LIST

### PATENT LITERATURE

Patent Literature 1: JP 2011-004701 A
Patent Literature 2: JP 2012-115173 A

### SUMMARY OF INVENTION

### TECHNICAL PROBLEMS

Meanwhile, in the grooved noodles of Patent Literatures 1 and 2, the grooves are closed upon boiling; however, the grooves leave traces in the shape of a tiny hangnail at the surfaces of the noodle strings. Thus, the cross-sectional shape of the grooved noodles after being boiled is far from a true circle as compared to a non-grooved noodle. It was found that such a trace in the shape of a hangnail decreases a shiny or glossy feel of a boiled noodle, and also increases so-called "dissolving upon boiling," that is, starch contained in the noodle dissolves in hot water upon boiling. A shiny or glossy feel of a noodle is particularly a matter of interest in the field of pasta characterized in its smooth appearance, and if a trace in the shape of a hangnail remains at the surface of a noodle, a clear appearance specific to pasta is impaired in some cases. Further, if the "dissolving upon boiling" occurs, the quantity of noodles decreases upon boiling, and also the surfaces of the noodles roughen, thus degrading a shiny or glossy feel.

The present invention is made to overcome the foregoing problems, and an object of the invention is to provide a grooved noodle that reduces boiling time compared to boiling of a non-grooved noodle, has a cross-sectional shape close to a true circle after being boiled, minimizes the "dissolving upon boiling" in boiling, and has a good appearance after being boiled.

### SOLUTION TO PROBLEMS

A grooved noodle according to the present invention is provided with four grooves extending along a noodle string direction at regular intervals, and a cross section of the grooved noodle perpendicular to the noodle string direction has a substantially circular main outline, and in the grooved noodle,
the cross section of a noodle string includes: a core region of substantially circular shape situated in a central part of the cross section and having a diameter that is 20% to 40% of a diameter of the noodle string; and four hook-shaped portions formed on a periphery of the core region due to the four grooves extending in a spiral manner in a same rotational direction while increasing in width from the core region to a surface of the noodle string,
each of the four hook-shaped portions includes a leg portion extending from the core region in a substantially radial direction of the noodle string and a blade portion connected to the leg portion and extending in a substantially circumferential direction of the noodle string,
the leg portion has a width of 14% to 28% of the diameter of the noodle string,
the blade portion has a first outer peripheral portion extending from the leg portion in the substantially radial direction, a second outer peripheral portion connected to a tip portion of the first outer peripheral portion and extending in the substantially circumferential direction, and a third outer peripheral portion extending from a tip portion of the second outer peripheral portion to the leg portion,
the second outer peripheral portion is configured such that a part thereof on a first outer peripheral portion side is closer to a center of the noodle string than another part thereof on a third outer peripheral portion side is,
an angular portion is formed at a joint portion between the first outer peripheral portion and the second outer peripheral portion, and
a joint portion between the second outer peripheral portion and the third outer peripheral portion is provided with an arc-shaped portion with a radius of curvature of 0.050 to 0.160 mm.

Preferably, the angular portion has an angle of 90 to 110 degrees.

Preferably, a ratio of the radius of curvature of a tip portion of the blade portion to a radius of a circle circumscribing the cross section is 5% to 16%.

Preferably, a ratio of an area of the cross section to an area of a circle circumscribing the cross section is 60% to 70%.

### ADVANTAGEOUS EFFECTS OF INVENTION

According to the present invention, the cross section of a noodle string includes a core region of substantially circular shape situated in a central part of the cross section and having a diameter that is 20% to 40% of a diameter of the noodle string and four hook-shaped portions formed on a periphery of the core region due to the four grooves extending in a spiral manner in a same rotational direction while increasing in width from the core region to a surface of the noodle string, each of the four hook-shaped portions includes a leg portion extending from the core region in a substantially radial direction of the noodle string and a blade portion connected to the leg portion and extending in a substantially circumferential direction of the noodle string, the leg portion has a width of 14% to 28% of the diameter of the noodle string, the blade portion has a first outer peripheral portion extending from the leg portion in the substantially radial direction, a second outer peripheral portion connected to a tip portion of the first outer peripheral portion and extending in the substantially circumferential direction, and a third outer peripheral portion extending from a tip portion of the second outer peripheral portion to the leg portion, the second outer peripheral portion is configured such that a part thereof on a first outer peripheral portion side is closer to a center of the noodle string than another part thereof on a third outer peripheral portion side is, an angular portion is formed at a joint portion between the first outer peripheral portion and the second outer peripheral portion, and a joint portion between the second outer peripheral portion and the third outer peripheral portion is provided with an arc-shaped portion with a radius of curvature of 0.050 to 0.160 mm. Therefore, the present invention makes it possible to provide a grooved noodle that reduces boiling time compared to boiling of a non-grooved noodle, has a cross-sectional shape close to a true circle after being boiled, minimizes the "dissolving upon boiling" in boiling, and has a good appearance after being boiled.

### BRIEF DESCRIPTION OF DRAWINGS

[FIG. 1] FIG. 1 is a perspective view showing a part of a grooved noodle according to an embodiment of the invention.
[FIG. 2] FIG. 2 is a cross-sectional view showing the grooved noodle according to the embodiment of the invention.
[FIG. 3] FIG. 3 is a cross-sectional view showing a hook-shaped portion of the grooved noodle according to the embodiment of the invention.
[FIG. 4] FIG. 4 is a cross-sectional view showing an enlarged hook-shaped portion of the grooved noodle according to the embodiment of the invention.
[FIG. 5] FIG. 5 is a view showing an example of a cross section of the grooved noodle according to the embodiment of the invention after being boiled.
[FIG. 6] FIG. 6 is a cross-sectional view showing a grooved noodle of Comparative Example 3.
[FIG. 7] FIG. 7 is a view showing an example of a cross section of a grooved noodle of Comparative Examples 1 to 3 after being boiled.

### DESCRIPTION OF EMBODIMENTS

The present invention is described in detail below based on a preferred embodiment illustrated in the accompanying drawings.

The description of constituent elements below is made based on a representative embodiment of the present invention, but the present invention is not limited to such an embodiment.

In the present description, a numerical range described using "to" means a range including numerical values given before and after "to" as the lower limit and the upper limit.

### Embodiment

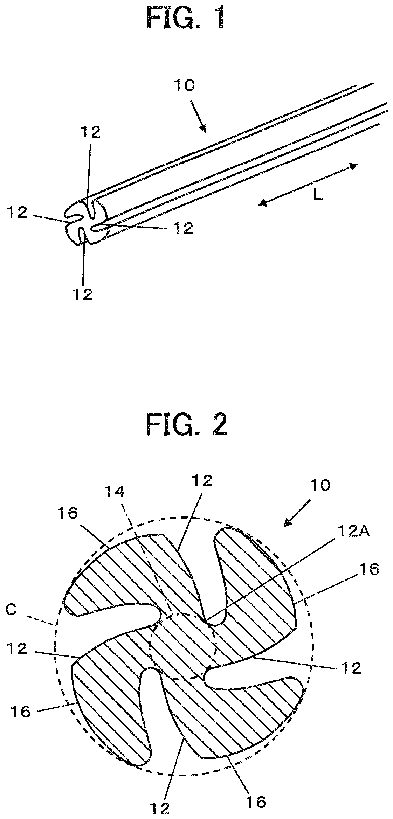

FIG. 1 shows a grooved noodle 10 according to an embodiment of the present invention. The grooved noodle 10 is constituted of a dry spaghetti noodle extending in a noodle string direction L. The grooved noodle 10 is provided in its periphery with four grooves 12 extending along the noodle string direction L at regular intervals.

As shown FIG. 2, the grooved noodle 10 has a substantially circular main outline in cross section. In other words, if the four grooves 12 were not present, the grooved noodle 10 would be in the shape of a substantial circle C in cross section. Further, a substantially circular core region 14 is secured in a central part of the cross section of the noodle string. The core region 14 is a solid region where the grooves 12 are not present. The expression "substantially circular" encompasses a true circle and regular polygons with eight or more vertices that are close to a true circle.

The grooves 12 have a cross-sectional shape extending in a spiral manner in the same rotational direction while increasing in width from the periphery of the core region 14 to the surface of the noodle string, with the spiral having its center at the core region 14. A deepest part of a lateral surface 12A of each groove 12 is in contact with the outer periphery of the core region 14 so as to extend in a tangential direction of the outer periphery of the core region 14, and each groove 12 has a groove width gradually increasing from the periphery of the core region 14 to the surface of the noodle string.

The four grooves 12 have the same cross-sectional shape curving in the same rotational direction and are disposed at regular intervals in a circumferential direction of the grooved noodle 10. Due to the grooves 12 as above, four hook-shaped portions 16 oriented in the same rotational direction are formed on the periphery of the core region 14 in the cross section of the noodle string. While due to the grooves 12, the cross-sectional area of the grooved noodle 10 is smaller than the area of the circle C circumscribing the cross section, the boiling time of the noodles can be reduced and also the boiled noodles can have good texture when the ratio of the cross-sectional area to the area of the circle C is specified to about 60% to about 70%.

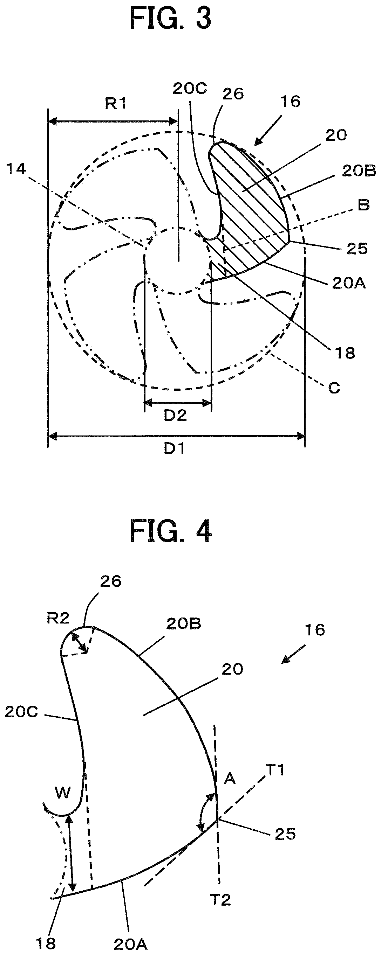

The shaded area in FIG. 3 represents one hook-shaped portion 16. The hook-shaped portion 16 includes a leg portion 18 extending from the core region 14 in a substantially radial direction of the noodle string and a blade portion 20 connected to the leg portion 18 and extending in a substantially circumferential direction of the noodle string. In FIG. 3, a boundary line B between the leg portion 18 and the blade portion 20 is shown by a dashed line. The portion on the core region 14 side with respect to the boundary line B is the leg portion 18, and the remainder is the blade portion 20. The leg portion 18 and the blade portion 20 are smoothly connected to each other and integrally form a hook shape.

As shown in FIG. 4, the blade portion 20 has a first outer peripheral portion 20A that extends from the leg portion 18 in a substantially radial direction of the noodle string which is the direction in which the leg portion 18 extends, a second outer peripheral portion 20B in an arc shape that is connected to a tip portion of the first outer peripheral portion 20A and extends in a substantially circumferential direction of the noodle string, and a third outer peripheral portion 20C that extends from a tip portion of the second outer peripheral portion 20B to the leg portion 18 while curving. The second outer peripheral portion 20B is configured such that a part thereof on the first outer peripheral portion 20A side is closer to the center of the noodle string than another part thereof on the third outer peripheral portion 20C side is. Accordingly, the part of the second outer peripheral portion 20B on the third outer peripheral portion 20C side is in contact with the circle C representing the main outline of the noodle string, while the part of the second outer peripheral portion 20B on the first outer peripheral portion 20A side is located inward from the circle C by a certain distance, as shown in FIG. 3.

As shown in FIG. 4, a joint portion between the second outer peripheral portion 20B and the third outer peripheral portion 20C is provided with an arc-shaped portion 26 with a radius of curvature R2 of 0.050 to 0.160 mm, preferably 0.080 to 0.140 mm. Preferably, the radius of curvature R2 of the arc-shaped portion 26 is in proportional relation with the thickness of the grooved noodle 10, i.e., a radius R1 of the circle C circumscribing a cross section of the noodle string. Specifically, the ratio R2/R1 (mm/mm) of the radius of curvature R2 to the radius R1 of the circle C circumscribing the cross section of the noodle string is preferably 5.0% to 15.0%, more preferably 6.5% to 12.5%. With the ratio R2/R1 of the radius of curvature R2 to the radius R1 of the circle C being out of the foregoing range, steps and hangnail-shaped portions tend to be generated at the surface of the noodle string when the grooved noodle 10 is boiled and the grooves 12 are closed.

As shown in FIG. 4, a joint portion between the first outer peripheral portion 20A and the second outer peripheral portion 20B of the blade portion 20 is provided with an angular portion 25 with an angle A. The angle A of the angular portion 25 herein is defined as an angle between a tangent T1 of the first outer peripheral portion 20A at the angular portion 25 and a tangent T2 of the second outer peripheral portion 20B at the angular portion 25. The angular portion 25 has an angle A of preferably 90 degrees or more, more preferably 90 to 110 degrees, and even more preferably 93 to 105 degrees. With the angle A of the angular portion 25 being out of the foregoing angular range, steps and hangnail-shaped objects tend to be generated at the surface of the noodle string when the grooved noodle 10 is boiled and the grooves 12 are closed.

A diameter D2 of the substantially circular core region 14 is specified to a value of 20% to 40% of a diameter D1 of the noodle string, i.e., the diameter of the circle C representing the main outline of the noodle string, as shown in FIG. 3. A width W of the leg region 18 of the hook-shaped portion 16 shown in FIG. 4 is specified to a value of 14% to 28% of the diameter D1 of the noodle string. The width W of the leg portion 18 can be defined as, for instance, the smallest dimension of the leg portion 18 in a direction perpendicular to the direction in which the leg portion 18 extends.

While the size of the grooved noodle 10 is not particularly limited, the diameter D1 of the noodle string may be specified to 1.8 to 2.8 mm, and the length of the noodle string may be specified to 250 mm or 165 mm, for example.

The grooved noodles 10 as above are typically obtained by extruding a dough formed from raw material powder including wheat flour through through-holes of a die to shape the dough into a noodle string form. In the forming method as above, noodle strings having a cross-sectional shape corresponding to the shape of the through-holes of the die are continuously extruded. Thus, the grooved noodles 10 having the grooves 12 along the noodle string direction L can be efficiently produced by specifying the shape of the through-holes to a desired cross-sectional shape.

In cooking, when the grooved noodle 10 is placed and boiled in a high-temperature water, water and heat penetrate the noodle string through the outer peripheral surface of the noodle string; at this time, high-temperature water also enters the four grooves 12, so that water and heat are absorbed in the noodle string efficiently and quickly. Owing to the presence of the four grooves 12 and the core region 14, boiling can be completed in a significantly short time compared to, for instance, a non-grooved noodle, and also a good texture can be obtained with a water gradient from the surface side of the noodle string to the center thereof. Those characteristics allow the grooved noodle 10 to obtain excellent texture even through short-time cooking using, for example, a microwave oven.

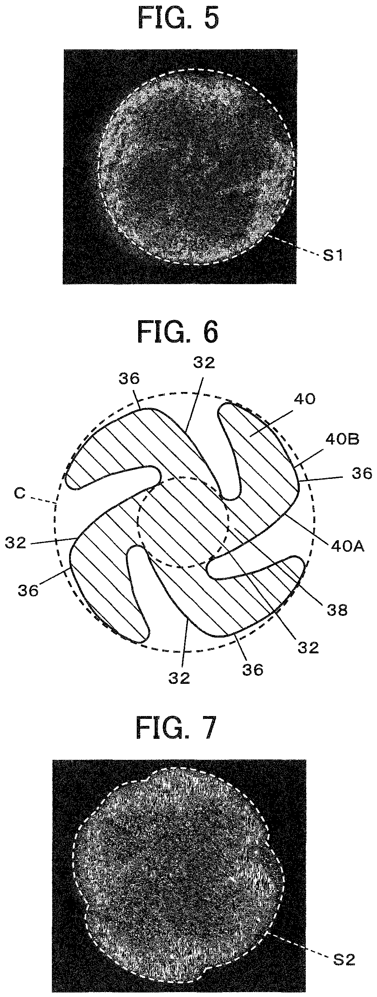

Further, when the grooved noodle 10 is boiled in high-temperature water, the hook-shaped portions 16 absorb water and expand, whereupon the four grooves 12 are closed. Meanwhile, the second outer peripheral portion 20B of the blade portion 20 of each hook-shaped portion 16 is configured such that the part thereof on the first outer peripheral portion 20A side is closer to the center of the noodle string than the part thereof on the third outer peripheral portion 20C side is, the angular portion 25 is formed at the joint portion between the first outer peripheral portion 20A and the second outer peripheral portion 20B, and the arc-shaped portion 26 of the blade portion 20 of each hook-shaped portion 16 has a radius of curvature R2 of 0.050 to 0.160 mm; therefore, in the above process, the angular portion 25 and the arc-shaped portion 26 of adjacent hook-shaped portions 16 are joined almost continuously, thus leading to a step-free and smooth surface S1 of the noodle string as shown in, for example, FIG. 5. Hence, a boiled noodle has a smooth and clear appearance without a trace in the shape of a hangnail after the grooves 12 are closed.

Further, in the grooved noodle 10, since a trace in the shape of a hangnail is not generated even after the grooves 12 are closed upon boiling, scratches are hardly generated even when the noodles rub one another during cooking, so that the noodle surface can be prevented from being roughened or coarsened. Further, since the noodle surface is not rough but smooth, the phenomenon that starch contained in the noodle dissolves in hot boiling water, i.e., a so-called "dissolving upon boiling", can be reduced. Generally, it is known that when the "dissolving upon boiling" occurs, boiled noodles adhere to one another so that unevenly boiled portions are generated, and also an ingredient of the noodles flows out into the hot water, resulting in a decreased quantity of noodles. Since the grooved noodle 10 in the embodiment of the present invention can minimize the "dissolving upon boiling," boiled noodles can be prevented from adhering to one another so that unevenly boiled portions are not generated, and also an ingredient of the noodles can be prevented from flowing out so that the quantity of noodles does not decrease. Thus, this invention is advantageous.

As described above, the grooved noodle 10 according to the embodiment of the present invention reduces boiling time compared to boiling of a non-grooved noodle, has a cross-sectional shape close to a true circle after being boiled, minimizes the "dissolving upon boiling" in boiling, and has a good appearance after being boiled.

The grooved noodle 10 of the present invention can be produced by suitably adopting a known production method. The grooved noodle 10 of the present invention can be cooked in a short time compared to a non-grooved noodle; among various types of noodles, pastas require a longer cooking time compared to other types of noodles, and hence, this invention is particularly effective.

A method of producing the grooved noodle 10 of the present invention is described below according to a pasta production method.

The grooved noodle 10 of the present invention can be produced by kneading raw material powder to form a dough and forming the dough into the shape of the grooved noodle 10 of the present invention. As the main ingredient of the raw material powder, one type of wheat flour derived from durum wheat or common wheat may be used alone, or plural types of wheat flour may be mixed for use. Semolina powder may be used as the wheat flour, for example. For raw materials of the grooved noodle 10, ingredients commonly used as raw materials of noodles may be mixed and used, and examples of the ingredients include, in addition to wheat flour, grain flours other than wheat flours, starches, sugars, salts, seasonings, and thickeners.

Kneading water is added when the raw material powder is kneaded to form a dough. For the kneading water, various types of water that may be used for producing general noodles are applicable, such as fresh water, acidic water, alkaline water, and salt water. Also for the amount of the kneading water, an amount that may be used for producing general noodles is applicable and, typically, is often 20 to 30 parts by mass with respect to 100 parts by mass of raw material powder.

The formed dough is, for instance, extruded from a die provided with through-holes by means of a high-pressure extruder to shape noodle strings of the grooved noodles 10. The noodle strings (raw noodle strings) thus formed usually contain 22% to 30% water and are hence soft. The raw noodle strings as above may be directly cooked to be eaten, or may be frozen or refrigerated to be cooked within a storage life. However, in order to improve the handleability and preservability, the noodle strings are preferably dried to a water content of 14% or less.

The noodle strings can be dried by an ordinary method, and one adoptable method is, for example, a method in which a plurality of noodle strings before being dried are placed at spaced intervals so as not to adhere to one another and dried in a humidity-controlled, constant temperature room. Typical drying conditions are, for instance, 18 to 28 hours at a temperature of 40°C to 60°C, 8 to 11 hours at a temperature of 60°C to 84°C, or about 2 to about 5 hours at a temperature of 84°C or higher.

The grooved noodle 10 of the present invention is cooked, whereby a cooked noodle that is eatable is obtained. The method of cooking the grooved noodle 10 is not particularly limited; for example, the grooved noodles 10 are put in a sufficient amount of boiling water and boiled, thereby obtaining boiled noodles having excellent texture in a short time.

### EXAMPLES

The invention is described below in detail by way of examples. However, the invention should not be construed as being limited to the following examples.

### [Example 1]

To 100 parts by mass of durum semolina, 26 parts by mass of water was added and mixed, and the mixture was kneaded to form a dough. A die having through-holes corresponding to the cross-sectional shape of the grooved noodle 10 shown in FIG. 2 was attached to a pasta machine, from which the kneaded dough was extruded under a reduced pressure of -600 mmHg to form raw noodle strings. The raw noodle strings were dried by an ordinary method. Thus, dried spaghetti noodles of 22 cm length were produced.

The dimensions of respective parts of the grooved noodle 10 were specified as follows:
- Diameter D1 of the main outline (circle C) = 2.0 mm (radius = 1.0 mm);
- Radius of curvature R2 of the arc-shaped portion 26 of the blade portion 20 = 0.050 mm;
- Angle A of the angular portion 25 = 95 degrees;
- Ratio D2/D1 (%) of the diameter D2 of the core region 14 to the diameter D1 of the noodle string = 25%;
- Ratio W/D1 (%) of the width W of the leg portion 18 to the diameter D1 of the noodle string = 18.5%;
- Width of the groove 12 = 0.45 mm;
- Depth of the groove 12 = 0.78 mm.

### [Examples 2 to 7]

Dried spaghetti noodles of Examples 2 to 7 were produced in the same manner as Example 1 except that the radius of curvature R2 of the arc-shaped portion 26 of the blade portion 20 in the grooved noodle 10 was changed to respective values within the range of 0.050 to 0.160 mm as shown in Table 1 below.

### [Examples 8 to 14]

Dried spaghetti noodles of Examples 8 to 14 were produced in the same manner as Example 4 except that the angle A of the angular portion 25 in the grooved noodle 10 was changed to respective values as shown in Table 2 below.

### [Comparative Example 1]

Dried spaghetti noodles of Comparative Example 1 were produced in the same manner as Example 1 except that the radius of curvature R2 of the arc-shaped portion 26 of the blade portion 20 in the grooved noodle 10 was changed to 0.030 mm as shown in Table 1 below.

### [Comparative Example 2]

Dried spaghetti noodles of Comparative Example 2 were produced in the same manner as Example 1 except that the radius of curvature R2 of the arc-shaped portion 26 of the blade portion 20 in the grooved noodle 10 was changed to 0.180 mm as shown in Table 1 below.

### [Comparative Example 3]

Dried spaghetti noodles of Comparative Example 3 were produced in the same manner as Example 1 except that the cross-sectional shape of the noodle string was changed to the shape shown in FIG. 6 (the shape shown in FIG. 5 of JP 2012-115173 A) and the diameter D of the circle C being the main outline was specified to 2.0 mm. It should be noted that while the cross-sectional shape shown in FIG. 6 has four grooves 32 and four hook-shaped portions 36 as with the cross-sectional shape of the grooved noodle 10 shown in FIG. 2, the hook-shaped portion 36 does not have an angular portion at the joint portion between a first outer peripheral portion 40A and a second outer peripheral portion 40B of a blade portion 40. The joint portion between the first outer peripheral portion 40A and the second outer peripheral portion 40B has a curved shape with a radius of curvature of 0.4 mm.

### [Evaluation Test]

The dried spaghetti noodles produced in each of Examples 1 to 14 and Comparative Examples 1 to 3 were taken in a quantity of 100 g and boiled in a sufficient amount of hot water for 3 minutes. After being cooked, the spaghetti noodles were taken out and drained. Ten trained panelists observed one spaghetti noodle and evaluated the appearance of the spaghetti noodle according to evaluation criteria E1 below. The average of evaluation scores thus given by the ten panelists was calculated as the final evaluation score. The circularity of the boiled spaghetti noodle was also calculated in an evaluation test E2 below. The percentage of the "dissolving upon boiling" of the spaghetti noodle was also calculated in an evaluation test E3 below. For reference, commercial dried spaghetti noodles (diameter: 2 mm) having a circular cross-sectional shape with no grooves were boiled for a proper period of time, i.e., 12 minutes, and evaluated in the same manner.

### <Evaluation criteria E1 of appearance>

5 points: The surface was shiny and looked very smooth; the appearance was very good.
4 points: The surface was shiny and gave an impression of being smooth; the appearance was good.
3 points: The surface had a slightly unsatisfactory shiny or glossy feel but looked smooth; the appearance was moderate.
2 points: The surface had a less shiny or glossy feel and looked rough; the appearance was poor.
1 point: The surface had no shiny or glossy feel and looked uneven; the appearance was very poor.

### <Evaluation test E2 for circularity>

An image of a cross section of a boiled spaghetti noodle sample was taken. In each of Examples 1 to 14, a cross-sectional image was obtained with the surface S1 of the noodle string being smooth as shown in FIG. 5 for instance, whereas in each of Comparative Examples 1 to 3, a cross-sectional shape was obtained with a surface S2 of the noodle string having steps as shown in FIG. 7 for instance. Each of the taken cross-sectional images was displayed on a computer, and there were determined a true circle drawn to include a point on the outer circumference farthest from the center of the cross section and a point on the outer circumference situated 180 degrees opposite to the foregoing point with respect to the center of the cross section (the diameter of this true circle was taken as the outermost diameter) and a true circle drawn to include a point on the outer circumference closest to the center of the cross section and a point on the outer circumference situated 180 degrees opposite to the foregoing point with respect to the center of the cross section (the diameter of this true circle was taken as the innermost diameter). Then, the circularity was calculated using Formula (1) below. The evaluation test was carried out 10 times for each sample, and the average thereof was calculated as the final circularity. The circularity closer to 0 indicates that the cross section of the noodle string is closer to a true circle, while a larger value indicates that the cross section of the noodle string is more greatly different from a true circle. Circularity = (Outermost diameter - Innermost diameter) / 2)

### <Evaluation test E3 for percentage of "dissolving upon boiling">

A sample of the dried spaghetti noodles produced in each of Examples 1 to 14 and Comparative Examples 1 to 3 was accurately weighed to 100 g, put and dried in a hot air dryer with a temperature of 80°C and a humidity of 40% for 3 hours, and the anhydrous mass was measured. Separately, the dried spaghetti noodles were accurately weighed to 100 g, boiled in a sufficient amount of hot water for 3 minutes, and then cooled with running water. The resulting noodles were similarly put and dried in a hot air dryer with a temperature of 80°C and a humidity of 40% for 3 hours, and the anhydrous mass was measured. The percentage of "dissolving upon boiling" was calculated using Formula (2) below. The evaluation test was carried out 10 times for each sample, and the average thereof was calculated as the final percentage of "dissolving upon boiling." Percentage of "dissolving upon boiling" (%) = (Anhydrous mass of 100 g of dried spaghetti noodles - Anhydrous mass of 100 g of dried spaghetti noodles after being cooked) / Anhydrous mass of 100 g of dried spaghetti noodles × 100

The averages of the appearance evaluations by the 10 panelists and the averages of the calculation results of the circularity and the calculation results of the percentage of "dissolving upon boiling" are shown in Table 1. The hyphen ("-") in Tables 1 and 2 represents that there is no applicable value.

### [Table 1]

**Table 1**

| | EX 1 | EX 2 | EX 3 | EX 4 | EX 5 | EX 6 | EX 7 | CE 1 | CE 2 | Reference example |
|---|---|---|---|---|---|---|---|---|---|---|
| Radius R1 (mm) | 1.0 | 1.0 | 1.0 | 1.0 | 1.0 | 1.0 | 1.0 | 1.0 | 1.0 | 1.0 |
| Radius of curvature R2 (mm) | 0.050 | 0.065 | 0.080 | 0.100 | 0.110 | 0.125 | 0.160 | 0.030 | 0.180 | - |
| R2/R1 × 100(%) | 5.0 | 6.5 | 8.0 | 10.0 | 11.0 | 12.5 | 16.0 | 3.0 | 18.0 | - |
| Angle (degrees) | 95 | 95 | 95 | 95 | 95 | 95 | 95 | 95 | 95 | - |
| Appearance evaluation | 3.6 | 4.0 | 4.3 | 4.6 | 4.5 | 4.1 | 3.7 | 2.8 | 2.5 | 5.0 |
| Circularity | 0.039 | 0.032 | 0.027 | 0.024 | 0.026 | 0.031 | 0.038 | 0.065 | 0.072 | 0.019 |
| Percentage of "dissolving upon boiling" (%) | 4.1 | 3.9 | 3.7 | 3.7 | 3.8 | 4.0 | 4.2 | 4.8 | 5.0 | 3.6 |

| | | | | | | | | | | |
|---|---|---|---|---|---|---|---|---|---|---|
| EX: Example CE: Comparative Example | | | | | | | | | | |

### [Table 2]

**Table 2**

| | EX 8 | EX 9 | EX 10 | EX 11 | EX 12 | EX 13 | EX 14 | CE 3 |
|---|---|---|---|---|---|---|---|---|
| Radius R1 (mm) | 1.0 | 1.0 | 1.0 | 1.0 | 1.0 | 1.0 | 1.0 | 1.0 |
| Radius of curvature R2 (mm) | 0.100 | 0.100 | 0.100 | 0.100 | 0.100 | 0.100 | 0.100 | 0.110 |
| R2/R1 × 100(%) | 10.0 | 10.0 | 10.0 | 10.0 | 10.0 | 10.0 | 10.0 | 11.0 |
| Angle (degrees) | 88 | 90 | 93 | 98 | 105 | 110 | 115 | - |
| Appearance evaluation | 3.5 | 4.1 | 4.5 | 4.6 | 4.3 | 3.7 | 3.3 | 2.8 |
| Circularity | 0.032 | 0.028 | 0.026 | 0.025 | 0.027 | 0.029 | 0.036 | 0.074 |
| Percentage of "dissolving upon boiling" (%) | 4.1 | 3.9 | 3.8 | 3.7 | 3.8 | 3.9 | 4.1 | 4.6 |

| | | | | | | | | |
|---|---|---|---|---|---|---|---|---|
| EX: Example CE: Comparative Example | | | | | | | | |

The results in Table 1 demonstrate that in Examples 1 to 7 with the radius of curvature R2 of the arc-shaped portion 26 of the blade portion 20 being within the proper range of 0.050 to 0.160 mm, the appearance evaluation is not lower than 3 points and thus good, and the circularity is not more than 0.050, which indicates a good shape close to a substantially true circle. In addition, the percentage of "dissolving upon boiling" is not more than 4.5% and is equivalent to the percentage of "dissolving upon boiling" of a common spaghetti noodle with no grooves, which is 3.6%.

In contrast, in Comparative Examples 1 and 2 with the radius of curvature R2 being out of the proper range, all evaluation results are inferior to those of Examples 1 to 7.

The results in Table 2 demonstrate that in Examples 8 to 14 with the angular portion 25, the appearance evaluation is not lower than 3 points and thus good, and the circularity is not more than 0.050, which indicates a good shape close to a substantially true circle. In addition, the percentage of "dissolving upon boiling" is not more than 4.5% and is equivalent to the percentage of "dissolving upon boiling" of a common spaghetti noodle with no grooves, which is 3.6%.

In contrast, in Comparative Example 3 with no angular portion 25, all evaluation results are inferior to those of Examples 8 to 14.

Examples 9 to 13 with the angle A of the angular portion 25 being within the range of 90 to 110 degrees were rated higher than Example 8 with the angle A being 88 degrees and Example 14 with the angle A being 115 degrees. This reveals that the angle A of the angular portion 25 being within the range of 90 to 110 degrees is favorable.

Besides pasta such as spaghetti, the present invention is also applicable to various kinds of noodles including soba (Japanese noodle made from buckwheat flour), udon (Japanese noodle made from wheat flour), and ramen (Japanese noodle of Chinese origin).

The present invention is also applicable to noodles in various forms, such as raw noodles, boiled noodles, steamed noodles, and instant noodles, in addition to dry noodles. It should be noted that dry noodles require a longer boiling time than raw noodles or the like, so that the effect of reducing boiling time is to be higher when the present invention is applied to dry noodles. Production of dry noodles may be carried out by shaping raw noodles such that the noodles become the grooved noodles 10 of the present invention upon drying and subjecting the shaped raw noodles to humidity-conditioned drying, followed by cooling, thus obtaining a final product.

When noodles are produced using extrusion molding, noodle production and groove formation can be carried out simultaneously by use of a die having through-holes in the same shape as the cross-sectional shape of the noodle string, and this facilitates the application of the invention.

### REFERENCE SIGNS LIST

10 grooved noodle, 12, 32 groove, 12A lateral surface, 14 core region, 16, 36 hook-shaped portion, 18, 38 leg portion, 20, 40 blade portion, 20A, 40A first outer peripheral portion, 20B, 40B second outer peripheral portion, 20C third outer peripheral portion, 25 angular portion, 26 arc-shaped portion, A angle, B boundary line, C circle, D1, D2 diameter, R1 radius, R2 radius of curvature, L noodle string direction, S1, S2 surface, T1, T2 tangent, W width.

## Claims

1. A grooved noodle which is provided with four grooves extending along a noodle string direction at regular intervals and whose cross section perpendicular to the noodle string direction has a substantially circular main outline,
wherein the cross section of a noodle string includes: a core region of substantially circular shape situated in a central part of the cross section and having a diameter that is 20% to 40% of a diameter of the noodle string; and four hook-shaped portions formed on a periphery of the core region due to the four grooves extending in a spiral manner in a same rotational direction while increasing in width from the core region to a surface of the noodle string,
each of the four hook-shaped portions includes a leg portion extending from the core region in a substantially radial direction of the noodle string and a blade portion connected to the leg portion and extending in a substantially circumferential direction of the noodle string,
the leg portion has a width of 14% to 28% of the diameter of the noodle string,
the blade portion has a first outer peripheral portion extending from the leg portion in the substantially radial direction, a second outer peripheral portion connected to a tip portion of the first outer peripheral portion and extending in the substantially circumferential direction, and a third outer peripheral portion extending from a tip portion of the second outer peripheral portion to the leg portion,
the second outer peripheral portion is configured such that a part thereof on a first outer peripheral portion side is closer to a center of the noodle string than another part thereof on a third outer peripheral portion side is,
an angular portion is formed at a joint portion between the first outer peripheral portion and the second outer peripheral portion, and
a joint portion between the second outer peripheral portion and the third outer peripheral portion is provided with an arc-shaped portion with a radius of curvature of 0.050 to 0.160 mm.

2. The grooved noodle according to claim 1,
wherein the angular portion has an angle of 90 to 110 degrees.

3. The grooved noodle according to claim 1 or 2,
wherein a ratio of the radius of curvature of a tip portion of the blade portion to a radius of a circle circumscribing the cross section is 5% to 16%.

4. The grooved noodle according to any one of claims 1 to 3,
wherein a ratio of an area of the cross section to an area of a circle circumscribing the cross section is 60% to 70%.
